# EUROPEAN PATENT APPLICATION

(11) **EP 4 800 917 A1**
(43) Date of publication of application: **02.09.2026**
(21) Application number: 25305265.8
(22) Date of filing: 27.02.2025
(51) Int. Cl.: H02P 29/024, H02P 3/18

(54) **METHODS FOR CONFIGURING A MOTOR DRIVE AND APPARATUSES FOR IMPLEMENTING THE SAME**

(71) Applicant: Schneider Toshiba Inverter Europe SAS, 27120 Pacy-sur-Eure (FR)
(72) Inventor: FRAPPÉ, Emmanuel, 92100 BOULOGNE (FR); DUTREY, Alain, 27120 FONTAINE SOUS JOUY (FR)
(74) Representative: Plasseraud IP

(57) **Abstract**

A method for managing a motor drive configured for driving an electric motor is proposed, which comprises, the motor drive being electrically coupled to a supply network for power supply of the motor drive and being electrically coupled to the electric motor through terminals for driving the electric motor: Upon detecting a reduction of power supplied to the motor drive by the supply network, controlling the electric motor to operate in a generator mode in which the electric motor supplies power to the motor drive through a motor signal by controlling the electric motor to operate according to a preconfigured first speed deceleration time ramp of deceleration of a speed of operation of the motor, upon determining that the electric motor operates in the generator mode, controlling the electric motor to operate in the generator mode according to a preconfigured second speed deceleration time ramp of deceleration of the speed of operation of the electric motor, wherein a slope of the preconfigured first speed deceleration time ramp is steeper than a slope of the preconfigured second speed deceleration time ramp.

## Description

The present disclosure relates to the field of electric motors and their uses, in particular to apparatuses configured for driving an electric motor.

Electric motor drives (e.g. electric induction motor drives) are typically designed to operate with any electrical (e.g. induction) motor, based on driving parameters which are determined during a measuring phase sometimes referred to as a "motor tuning" phase.

A motor drive is typically configured to, based on an electrical supply signal received from a supply network (e.g. an energy supplier network), generate a setpoint signal which is fed to the motor to which the motor drive is coupled for controlling the operations thereof. For this reason electric motor drives are often referred to as "Variable Speed Drives" (VSD).

A VSD may sometimes experience a so-called "undersupply fault," which corresponds to an insufficient power supply situation in which the electrical supply signal is no longer sufficient for the VSD to pursue its operation in a nominal mode. A worse case corresponds to a power outage (which may be referred to as a "mains loss"), where the VSD is no longer powered by the supply network.

Some conventional VSD functions are configured to react automatically to a mains loss to decelerate the motor following a specified ramp. However, configuring such a ramp requires an expert and the risk of letting the drive shut down if not well commissioned can never be entirely mitigated. This shut down risk further makes the configuration tedious as it usually requires several shuts down and restarts during commissioning of the VSD.

There is therefore a need for providing improved schemes for configuring a motor drive and apparatuses implementing the same that address at least some of the above-described drawbacks and shortcomings of the conventional technology in the art.

It is an object of the present subject disclosure to provide improved schemes for configuring a motor drive and apparatuses implementing the same.

Another object of the present subject disclosure is to provide an improved scheme for configuring a motor drive and apparatus implementing the same for alleviating the above-described drawbacks and shortcomings of conventional schemes, in particular in that the proposed scheme for configuring a motor drive may avoid the need for an expert for configuring a motor drive.

To achieve these objects and other advantages and in accordance with the purpose of the present subject disclosure, as embodied and broadly described herein, in one aspect of the present subject disclosure, a method for managing a motor drive configured for driving an electric motor is proposed. In one or more embodiments, the proposed method comprises, the motor drive being electrically coupled to a supply network for power supply of the motor drive (e.g. through one or more power supply network signals), and being electrically coupled to the electric motor through terminals for driving the electric motor (through motor supply signals): upon detecting a reduction of power supplied to the motor drive by the supply network (e.g. power supply network signals), controlling the electric motor to operate in a generator mode in which the electric motor supplies power to the motor drive through a motor (e.g. voltage, current) signal by controlling the electric motor to operate according to a preconfigured first speed deceleration time ramp of deceleration of a speed of operation of the motor, upon determining that the electric motor operates in the generator mode, controlling the electric motor to operate in the generator mode according to a preconfigured second speed deceleration time ramp of deceleration of the speed of operation of the electric motor, where a slope of the preconfigured first speed deceleration time ramp is steeper than a slope of the preconfigured second speed deceleration time ramp.

The proposed method advantageously provides a scheme that may be used to force the electric motor to operate in a generator mode in which the electric motor supplies electrical energy further to determining occurrence of an undersupply fault at the motor drive.

In one or more embodiments, the slope of the first speed deceleration time ramp may be chosen (configured) steeper than the slope of the second speed deceleration time ramp, so that the motor drive may advantageously force the motor to operate in the generator mode promptly upon detecting that an undersupply fault has occurred. This advantageously ensures that the motor is controlled to first switch to the generator mode in which the motor drive, now lacking sufficient supply, can use the energy fed back by the motor to control the operations of the motor, in particular according to the second speed deceleration time ramp, upon detection of an undersupply fault.

As the second speed deceleration time ramp may be user defined, configuration errors during configuration of the second speed deceleration time ramp may be mitigated by controlling the operations of the motor while operating according to the second (user-defined) speed deceleration time ramp so as to manage the deceleration pattern with which the speed of the motor decreases further to an undersupply fault (for example so as to avoid one or more of an excessive speed deceleration of the motor and an overly slow speed deceleration of the motor).

The preconfigured second speed deceleration time ramp may be user-configured for managing the driving of the electric motor further to occurrence of an undersupply fault and may reflect how the user wants the electric motor to be controlled further to occurrence of an undersupply fault at the motor drive

In some embodiments, the first speed deceleration time ramp may be configured in view of the second speed deceleration time ramp with a slope that is steeper than that of the second speed deceleration time ramp. For example, in some embodiments, the motor drive may be configured with a first speed deceleration time ramp of a slope that is steeper than a maximum slope prescribed for the user to configure the slope of the second speed deceleration time ramp.

The proposed scheme therefore provides an improved scheme for controlling deceleration of the speed of the motor upon occurrence of an undersupply fault (e.g. a mains loss).

In one or more embodiments, the determining that the electric motor operates in the generator mode may be performed through monitoring the value of a signal corresponding to the motor signal (such as for example, depending on the architecture of the motor drive, an electrical signal flowing in an internal bus of the motor drive). In some embodiments, the determining that the electric motor operates in the generator mode may comprise detecting that a signal corresponding to the motor signal has reached a generator mode detection voltage threshold.

In some embodiments, the preconfigured first speed deceleration time ramp may correspond to a first time duration for a speed of the electric motor to decelerate from a predefined first speed value to a predefined second speed value. In some embodiments, the preconfigured second speed deceleration time ramp may correspond to a second time duration for a speed of the electric motor to decelerate from the predefined first speed value to the predefined second speed value. In some embodiments, the first time duration may be shorter than the second time duration.

In one or more embodiments, the proposed method may further comprise: performing one or more monitoring of a value of an internal bus signal on an internal bus of the motor drive during the controlling of the electric motor to operate in the generator mode according to the preconfigured second speed deceleration time ramp of deceleration of the speed of operation of the electric motor.

In one or more embodiments, the proposed method may further comprise: monitoring a signal corresponding to the motor signal during operation of the electric motor in generator mode according to the preconfigured second speed deceleration time ramp.

In one or more embodiments, upon detecting that a signal corresponding to the motor signal reaches a predefined high limit threshold during operation of the electric motor in generator mode according to the preconfigured second speed deceleration time ramp, controlling the value of the signal corresponding to the motor signal to substantially correspond to a predefined high limit threshold.

In one or more embodiments, upon detecting that a signal corresponding to the motor signal reaches a predefined low limit threshold during operation of the electric motor in generator mode according to the preconfigured second speed deceleration time ramp, controlling the value of the signal corresponding to the motor signal to substantially correspond to a predefined low limit threshold.

In one or more embodiments, the signal corresponding to the motor signal may comprise an internal bus signal on an internal bus of the motor drive.

In some embodiments, the controlling the value of the signal may comprise controlling a value of the internal bus signal to remain in one or more of below the predefined low limit threshold and above the predefined high limit threshold.

In one or more embodiments, the proposed method may further comprise: upon determining that the speed of operation of the motor has reached a predefined minimum speed threshold, recording the stop of the motor operating in the generator mode.

In one or more embodiments, detecting the reduction of power supplied by the supply network may comprise detecting a loss of power supplied by the supply network.

In one or more embodiments, the motor drive may comprise a variable speed drive, VSD.

In another aspect of the present subject disclosure, an apparatus is proposed, which comprises a processor, a memory operatively coupled to the processor, and an interface for coupling to an electrical electric (e.g. induction) motor to be driven by the apparatus, wherein the apparatus is configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed. In yet another aspect of the present subject disclosure, a data set representing, for example through compression or encoding, a computer program as proposed herein, is proposed.

It should be appreciated that the present subject disclosure can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1A illustrates an exemplary electric motor system to which the proposed methods may be applied according to one or more embodiments;
Figure 1B illustrates an exemplary architecture of a motor drive to which the proposed methods may be applied according to one or more embodiments;
Figure 2 is a diagram that illustrates an exemplary scheme for managing a motor drive according to one or more embodiments;
Figure 3A illustrates an exemplary sequence of operations of a motor drive according to one or more embodiments;
Figure 3B illustrates an exemplary sequence of operations of a motor drive according to one or more embodiments;
Figure 3C illustrates an exemplary sequence of operations of a motor drive according to one or more embodiments;
Figure 4 is a diagram that illustrates an exemplary proposed method as a state machine according to embodiments;
Figure 5 illustrates an apparatus according to one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive, SSD drives), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

As used herein, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the present subject disclosure, the terms "coupled" and "connected", along with their derivatives, may be indifferently used to indicate that two or more elements are in direct physical or electrical contact with each other, or two or more elements are not in direct contact with each other, but yet still co-operate or interact with each other.

In the present subject disclosure, the terms "electrical motor," "electric motor" and "electric engine", may be indifferently used to refer to electrical machine that converts electrical energy into mechanical energy (such as kinetic energy - for example rotary or linear motion). The present disclosure may be implemented with any multi-phase electric motor, such as for example a multi-phase synchronous motor or asynchronous motor.

It should be understood that embodiments of the present subject disclosure may be used for managing operations of an electric motor drive configured for driving an electric (e.g. induction) motor, in particular, although not limited to, an electric (e.g. induction) motor drive configured for driving an asynchronous electric (e.g. induction) motor.

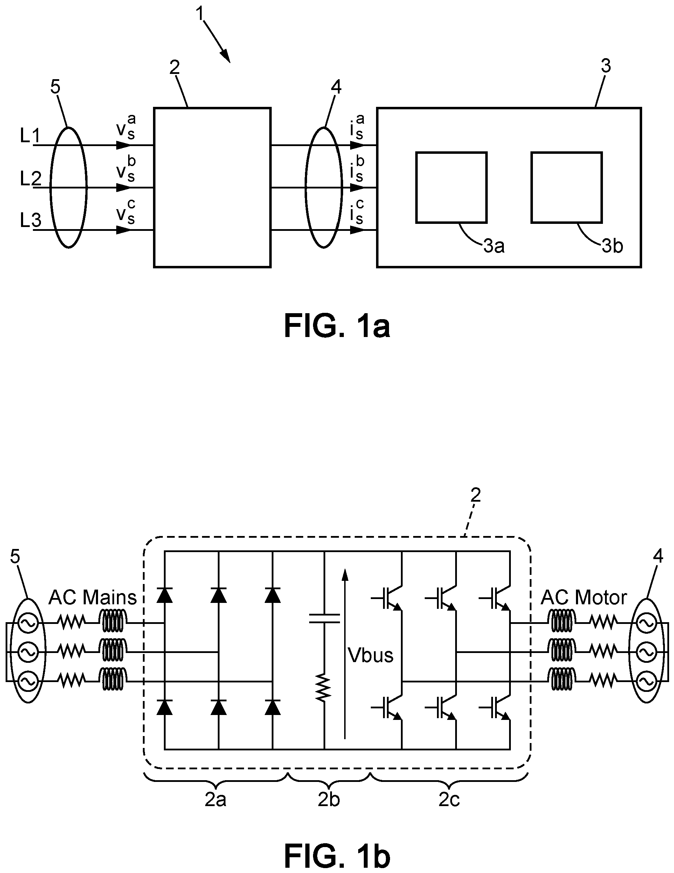

Figure 1A shows an exemplary electric motor system (1) to which the proposed methods may be applied according to one or more embodiments.

Shown on Fig. 1A is an electric motor system (1) comprising a motor drive (2) and an electric (e.g. induction) motor (3) which are operatively coupled with each other through an interface (4).

The electric (e.g. induction) motor (3) comprises a rotor (3a) and a magnetic core (which may sometimes be referred to as a "stator") (3b) which comprises a magnetic induction component (not shown on the figure), sometimes referred to as the "main induction" of the electric (e.g. induction) motor (3).

In some embodiments, a so-called "motor tuning" phase may be performed for determining configuration parameters of the motor drive (2) that corresponds to characteristics of the electric (e.g. induction) motor (3) so that the motor drive (2) be tuned for driving the electric (e.g. induction) motor (3).

In some embodiments the electric motor system (1) may comprise a motor drive health monitoring function (not represented on the figure) which, depending on the embodiment, may or not be implemented as an engine of the motor drive (2).

Depending on the embodiment, the motor drive health monitoring function may be implemented in software, as described above, or in hardware, such as an application specific integrated circuit (ASIC), or in the form of a combination of hardware and software, such as for example a software program intended to be loaded and executed on a component of FPGA (Field Programmable Gate Array) type.

Depending on the embodiment, the motor drive (2) may be implemented in software, as described above, or in hardware, such as an application specific integrated circuit (ASIC), or in the form of a combination of hardware and software, such as for example a software program intended to be loaded and executed on a component of FPGA (Field Programmable Gate Array) type.

As shown on Figure 1A, the motor drive (2) may receive, for example from a supply network (e.g. a grid network) (not represented on the Figure) supply electric signals (5) for power supply of the motor drive (2). For example, in some embodiments, the motor drive (2) may receive a three-phase power supply signal, in which case the supply signals (5) may comprise three supply (e.g. AC) voltage signals ${v}_{s}^{a} , {v}_{s}^{b}$, and ${v}_{s}^{c}$.

The motor drive (2) is configured to supply one or more setpoint electrical signals through the coupling interface (4) to the electric motor (3) to drive operations thereof. For example, in some embodiments, the motor drive (2) is configured to supply current signals ${i}_{s}^{a} , {i}_{s}^{b}$, and ${i}_{s}^{c}$ to control the operations of the motor (3).

For example, in some embodiments, the drive may be configured to implement a speed variator function, and as such may be configured to receive supply electrical signals and process such signals (e.g., in case of sinusoidal signals, process the frequency and/or amplitude of such signals) so as to generate electrical signals that feed an electric motor for controlling a speed parameter thereof (e.g. the rotational speed of a shaft driven by the motor). The electrical signals fed to the motor may typically correspond to a setpoint signal fed into the motor (such as, for example, a torque setpoint ramp signal, a speed setpoint ramp signal, a voltage setpoint step signal, etc.).

Fig. 1B shows a simplified exemplary architecture of a motor drive, such as, for example, the motor drive (2) shown on Fig. 1A.

As shown on Figure 1B, the motor drive (2) may receive, for example from a supply network (e.g. a grid network) (not represented on the Figure) supply electric signals (5) ("AC Mains") for power supply of the motor drive (2). For example, in some embodiments, the motor drive (2) may receive a three-phase power supply signal, in which case the supply signals (5) may comprise three supply (e.g. AC) voltage signals.

The motor drive (2) is also configured to supply one or more setpoint electrical signals through the coupling interface (4) to an electric motor to drive operations thereof. For example, in some embodiments, the motor drive (2) is configured to supply current signals ("AC Motor") to control the operations of the motor.

In one or more embodiments, the supply signal(s) are fed to an input rectifier bridge (2a) configured for generating a DC voltage signal fed to a DC bus (2b) of the motor drive (2) coupled to the input rectifier bridge (2a). The DC bus (2b) of the motor drive may sometimes be referred indifferently as the "Vbus" of the motor drive. In some embodiments in which the supply signal comprises a three-phase power supply signal, each of the supply signals of the three-phase power supply signal may be fed to an input of the input rectifier bridge (2a), so that they may be converted to a DC voltage signal flowing on the DC bus (2b).

As a consequence, the supply signal(s) received by the motor drive (2) may be reflected in one or more embodiments on the signal of the DC bus (2b) internal to the motor drive (2), and the signal flowing on the DC bus (2b) internal to the motor drive (2) may correspond to the supply signal(s) received by the motor drive (2).

In one or more embodiments, the DC bus (2b) internal to the motor drive (2) may also be coupled to an inverter bridge (2c), such as for example an inverter Insulated Gate Bipolar Transistor (IGBT) bridge, configured to reconstitute the one or more setpoint electrical signals fed to the electric motor through the coupling interface (4), in some embodiments based on the signal flowing on the DC bus (2b). For example, in some embodiments, the inverter bridge (2c) may be configured for producing a three-phase setpoint electrical signal of a frequency and/or amplitude modulated for driving the operations of the electrical motor (e.g. a Pulse Width Modulation (PWM) signal).

The use of an internal DC-bus (2b) in one or more embodiments of the motor drive may advantageously be leveraged for monitoring a level of the supply signal(s), through a change of which being reflected on a change of the internal DC-bus (2b) signal. In particular, an undersupply fault at the motor drive (for example a mains loss) may be reflected on the internal DC-bus (2b) signal, so that it may be detected by monitoring the internal DC-bus (2b) signal.

Conventional VSD functions react automatically to a mains loss to decelerate the electrical motor following a specified ramp for controlling the setpoint electrical signal fed to the electrical motor. Such functions require an expert configuration at the risk of letting the motor drive shut down if not well commissioned. This shut down risk further makes the configuration tedious as typically several shut down and restart operations may be performed during commissioning of the motor drive. In particular, the span of possible ramp settings is very limited by system properties (losses, inertia), a configured ramp which is too slow will end up in motor drive shut down, and the slope value of the ramp to be configured is *a priori* unknown most of the time (as it depends on total system loss profile which is not constant and depends on motor and VSD frequency).

Some functions (such as braking adaptation by DC Bus control) may allow the electrical motor to decelerate and for this reason may be seen as more robust. However, as they rely on DC Bus control, the motor speed is not controlled: Customers often wants the motor to follow a determined stop ramp in this situation to comply with process constraints, instead of the fastest possible ramp allowed by a zero total loss principle of a DC Bus control scheme.

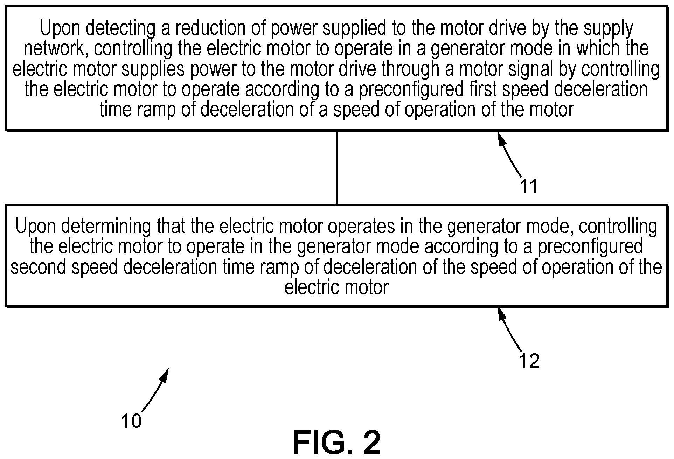

Figure 2 is a diagram that illustrates an exemplary scheme (10) for managing a motor drive according to one or more embodiments of the present subject disclosure.

One considers a motor drive electrically coupled to a supply network for power supply of the motor drive (e.g. through one or more power supply network signals), such as for example illustrated on Figs. 1A and 1B. The motor drive may also be electrically coupled to an electric (e.g. induction) motor (e.g. a 3-phase electric (induction) motor), such as for example illustrated on Figs. 1A and 1B, for driving the motor (through motor supply (setpoint) signals, for example through terminals).

In one or more embodiments, a speed-controlled deceleration sequence in case of an undersupply fault function, that may be - depending on the embodiment - implemented in a motor drive monitoring engine of an electric motor system comprising the electric motor and the motor drive (for example in the motor drive), may perform one or more of the following operations.

In one or more embodiments, the motor drive may be configured for, upon detecting a reduction of power supplied to the motor drive by the supply network (e.g. power supply network signals), controlling (11) the electric motor to operate in a generator mode in which the electric motor supplies power to the motor drive through a motor (for example current or voltage) signal by controlling the electric motor to operate according to a preconfigured first speed deceleration time ramp of deceleration of a speed of operation of the motor.

In one or more embodiments, the motor drive may control the electric motor to switch to a generator mode by using electrical (e.g. voltage, current) signals fed back by the electrical motor to the motor drive. In some embodiments, using the electrical motor in the generator mode may comprise using one or more electrical signals fed back by the motor to the motor drive through the interface coupling the motor drive to the motor. In some embodiments, the electrical (e.g. voltage, current) signals fed back by the electrical motor to the motor drive used in the generator mode may comprise a motor current signal and a motor voltage signal obtained at the terminals coupling the motor drive and the electrical motor.

In some embodiments, the motor voltage signal may be an AC voltage signal through which the motor drive operating in nominal mode (that is, in an operation mode in which the motor drive receives a sufficient power supply) drives the electrical motor.

In some embodiments, during operation of the electrical motor in generator mode, for example upon occurrence of an undersupply situation at the motor drive, the motor signal may correspond to the current signal (associated with the motor voltage signal) received from the electrical motor by the motor drive.

Advantageously, in architectures of the motor drive that use an internal electrical signal bus that carries an electrical signal that corresponds (in full or in part) to the motor signal in undersupply fault situations (e.g. in mains loss situations), the signal of the internal bus may be used to perform one or more of monitoring a status of one or more of the motor drive and the electrical motor, and controlling operations of the electrical motor according to embodiments of the present subject disclosure.

For example, the motor drive may control the electrical motor to operate in the generator mode according to a preconfigured first speed deceleration time ramp of deceleration of a speed of operation of the motor may be performed through controlling the internal electrical signal bus that carries the electrical signal that corresponds (in full or in part) to the motor signal.

Referring back to Fig. 1B, in one or more embodiments, occurrence of an undersupply fault situation in which the electrical supply level is less than that necessary for the motor drive to pursue its operation in a nominal mode may lead to a signal of the DC bus (2b) that corresponds to the electrical signal(s) fed back by the electrical motor to the motor drive instead of the power supply signal(s).

For example, in some embodiments, a (voltage) signal of the DC bus (2b) may correspond to (the AC voltage of) a motor signal fed back by the motor to the motor drive rectified by the Inverter Bridge (2c). In some embodiments, absent a power supply signal of a sufficient level (e.g. in case of mains loss), the (AC motor voltage) signal fed back by the motor to the motor drive (obtainable at the terminals of the motor drive through which the motor drive is coupled to the motor) may be linked to the (voltage) signal of the DC bus (2b)

As a consequence, in some embodiments, absent a power supply signal of a sufficient level (e.g. in case of mains loss), the signal fed back by the motor in generator mode may be monitored by monitoring the signal of the DC bus (2b). For example, the current signal fed back by the motor to the motor drive (obtainable at the terminals of the motor drive through which the motor drive is coupled to the motor) may be linked to the DC voltage signal of the DC bus (2b). As a consequence, features (e.g. a level, an amplitude) of the signal fed back by the motor to the motor drive may be determined through features of the DC voltage signal of the DC bus (2b).

In one or more embodiments, the motor drive may be configured to control operations of the electrical motor through controlling the signal of the DC bus (2b). For example, in some embodiments, the motor drive may be configured to control operations of the electrical motor to operate in the generator mode according to a preconfigured first speed deceleration time ramp of deceleration of a speed of operation of the motor through controlling the signal of the DC bus (2b).

Referring back to Fig. 2, in one or more embodiments, the motor drive may further be configured for, upon determining that the electric motor operates in the generator mode, controlling (12) the electric motor to operate in the generator mode according to a preconfigured second speed deceleration time ramp of deceleration of the speed of operation of the electric motor. Advantageously, in some embodiments, a slope of the preconfigured first speed deceleration time ramp may be steeper than a slope of the preconfigured second speed deceleration time ramp.

For example, in some embodiments, the motor drive may further be configured for, upon detecting that the motor (e.g. current) signal (corresponding to the voltage between the terminals) has reached a generator mode detection (e.g. voltage) threshold, controlling the electric motor to operate in the generator mode according to a preconfigured second speed deceleration time ramp of deceleration of the speed of operation of the motor.

As discussed above, in architectures of the motor drive that use an internal electrical signal bus that carries an electrical signal that corresponds (in full or in part) to the motor signal in undersupply fault situations (e.g. in mains loss situations), the signal of the internal bus may be used to perform one or more of monitoring a status of one or more of the motor drive and the electrical motor, and controlling operations of the electrical motor according to embodiments of the present subject disclosure.

For example, in some embodiments, the reduction of power supplied to the motor drive may be detected through detecting that the signal of the internal bus has reached a predefined undersupply fault threshold. As another example, in some embodiments the motor operating in generator mode may be detected through a motor signal reaching the generator mode detection voltage threshold, which in some embodiments may be detected through detecting that the signal of the internal bus has reached the generator mode detection voltage threshold. In some embodiments, the motor operating in generator mode further to occurrence of an undersupply fault at the motor drive may be detected through detecting that the signal of the internal bus has reached the generator mode detection voltage threshold further to detecting the undersupply fault through detecting that the signal of the internal bus has reached the undersupply fault threshold. In some embodiments, the undersupply fault threshold may be configured lower than the generator mode detection voltage threshold and the motor drive may be configured to detect that the signal of the internal bus has increased from the undersupply fault threshold to reach the generator mode detection voltage threshold.

Referring back to Fig. 1B, in some embodiments, the motor drive may be further configured for detecting that the motor (current) signal (corresponding to the voltage between the terminals) has reached the generator mode detection (voltage) threshold through detecting that the (voltage) signal of the DC bus (2b) has reached the generator mode detection (voltage) threshold.

In one or more embodiments, a slope of the preconfigured first speed deceleration time ramp may be steeper than a slope of the preconfigured second speed deceleration time ramp.

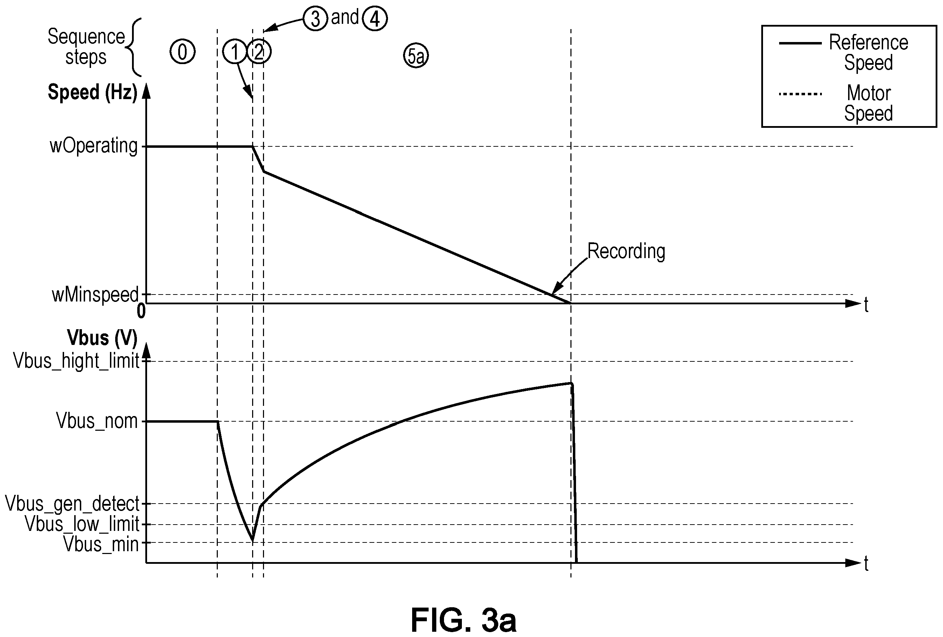

Figure 3A illustrates an exemplary sequence of operations of a motor drive according to one or more embodiments of the present subject disclosure.

One considers a motor drive electrically coupled to a supply network for power supply of the motor drive (e.g. through one or more power supply network signals), such as for example illustrated on Figs. 1A and 1B. The motor drive may also be electrically coupled to an electric (e.g. induction) motor (e.g. a 3-phase electric (induction) motor), such as for example illustrated on Figs. 1A and 1B, for driving the motor (through motor supply (setpoint) signals, for example through terminals).

In one or more embodiments, a motor drive undersupply management function, that may be - depending on the embodiment - implemented in a motor drive undersupply management engine of the motor drive of an electric motor system comprising the electric motor and the motor drive, may perform one or more operations of the following operating phases:
(⓪) *Normal operation*: In a first operating phase (⓪), the motor drive may operate normally (in a nominal operating mode) before the occurrence of an undersupply fault (e.g. of a mains phase loss). The speed of the motor is at a normal (nominal) operating level (referred to as "wOperating"), which corresponds to a normal (nominal) voltage level on the internal bus of the motor drive (referred to as "Vbus_nom").

As shown on Fig. 3A, in embodiments in which an internal bus electrical (voltage, current) signal can be monitored, the level of the internal bus electrical signal may be substantially stable while the motor drive operates in a nominal (normal) operating mode (for example at a level referred to as "Vbus_nom").

(①) *Undersupply fault detection (e.g. phase loss detection)*: In a second operating phase (①), upon the occurrence of an undersupply fault (e.g. of a mains phase loss), the motor drive may detect the undersupply fault (e.g. may detect the loss of mains voltage). For example, the motor drive may detect a power shutdown.

As shown on Fig. 3A, further to the occurrence of the undersupply fault (at the end of phase ⓪ in the example of Fig. 3A), in embodiments in which an internal bus electrical (voltage, current) signal can be monitored, the level of the internal bus electrical signal may decrease (in a substantially continuous manner) as the loss of supply may impact the internal bus electrical signal level.

In some embodiments, detection of the undersupply fault may be performed through detecting that the voltage level on the internal bus of the motor drive reaches a predefined undersupply fault threshold (referred to in such embodiments as "Vbus_min").

In some embodiments, detection of the undersupply fault may be performed through measuring the level of a power supply signal, such as for example a voltage level of a mains phase signal, and detecting that the level of a power supply signal reaches the predefined undersupply fault threshold.

In some embodiments, the undersupply fault threshold may be preconfigured as a critically minimum threshold before motor drive shutdown further to an undersupply fault.

As shown on Fig. 3A, prior to the detection of the undersupply fault, and after the occurrence of the undersupply fault, the speed of the motor may in some embodiments remain substantially at the normal (nominal) operating level (referred to as "wOperating").

(②) *Controlling the motor to switch to a generator mode*: In a third operating phase (②), the motor drive may control the motor to (switch to in order to) operate in a generator mode in which the electrical energy fed back by the motor is used by the motor drive.

For example, in some embodiments, the motor drive may be configured to drive the operations (including the speed) of the motor according to a preconfigured first speed deceleration time ramp of deceleration of the speed of (operation of) the motor (referred to in such embodiments as "Ramp_force_gen"). In some embodiments, the first speed deceleration time ramp may be preconfigured with a steep ramp for rapid deceleration of the speed of the motor in order to force the motor to promptly switch to operation in generator mode.

In some embodiments, the motor drive may be configured to, once an undersupply fault has been detected (for example through a level of an internal bus signal), switch to an operating mode in which it controls the speed of the motor (in some embodiments using control signals which are used in a nominal operating mode when there is no undersupply fault), while still monitoring in some embodiments for detection that the motor has switched to the generator mode (for example through the level of the internal bus signal).

As shown on Fig. 3A, the speed of the motor may decrease, for example from the normal (nominal) operating level (referred to as "wOperating"), according to the first speed deceleration time ramp.

As shown on Fig. 3A, in embodiments in which an internal bus electrical (voltage, current) signal can be monitored, upon controlling the deceleration of the motor speed according to the first speed deceleration time ramp, the level of the internal bus electrical signal may increase (in a substantially continuous manner) as the energy available upon deceleration of the motor may be supplied to the internal bus electrical signal level. In such embodiments (in which an internal bus electrical (voltage, current) signal can be monitored), the level of the internal bus electrical (voltage, current) signal may be monitored (in any suitable manner, such as for example, depending on the embodiment, substantially continuously, or substantially periodically) while the speed of the motor is controlled to ensure deceleration of the motor speed according to the first speed deceleration time ramp.

(③) *Generator mode detection*: In a fourth operating phase (③), the motor drive may monitor operations of the motor to determine that the motor has switched to the generator mode, for example through a signal corresponding to an electrical signal received from the motor (such as for example, in some embodiments, a (voltage, current) signal flowing on an internal bus of the motor drive) reaching a predefined generator detection mode.

For example, in some embodiments, the motor drive may be configured to monitor a level of the (e.g. voltage, current) signal on the internal bus and to determine (detect) that such level has reached the predefined generator mode threshold (referred to in such embodiments as "Vbus_gen_detect"). In some embodiments, further to determining (detecting) that the level of the (e.g. voltage, current) signal on the internal bus has reached the predefined generator mode threshold, the motor drive may validate that the motor is operating in generator mode.

As shown on Fig. 3A, the speed of the motor which may have been decreasing, for example from the normal (nominal) operating level (referred to as "wOperating"), according to the first speed deceleration time ramp, may reach a certain speed that corresponds to the predefined generator mode threshold.

As shown on Fig. 3A, in embodiments in which an internal bus electrical (voltage, current) signal can be monitored, while controlling the deceleration of the motor speed according to the first speed deceleration time ramp (leading to the speed of the motor decreasing accordingly), the level of the internal bus electrical signal may conversely increase, and it may be determined whether such level has reached the Vbus_gen_detect threshold.

(④) *Switch of speed control of the motor from the first speed deceleration time ramp to a second speed deceleration time ramp (e.g. user defined ramp)*: In a fifth operating phase (④), once it has been determined that the motor operates in generator mode, the motor drive may control operations of the motor (operating in generator mode) to set the reference speed of the motor to evolve according to a preconfigured second speed deceleration time ramp of deceleration of the speed of operation of the motor.

A speed deceleration time ramp according to which speed deceleration of the motor may be controlled may sometimes be referred to as a "speed reference," and in some embodiments may be configured in the motor drive through one or more speed reference parameters.

The fifth operating phase may be viewed in some embodiments as a switch from a first speed reference used for controlling operations of the motor to ensure, further to detection of an undersupply fault, that the motor reaches operation in a generator mode, to a second speed reference that may in some embodiments have been configured by the user of the motor drive.

As illustrated in Fig. 3A, one or more of the fourth operating phase (③) and the fifth operating phase (④) may be completed in a very short time (for example substantially instantly), so that in some embodiments the fourth operating phase (③) and the fifth operating phase (④) may be performed substantially concurrently.

In some embodiments, the second speed deceleration time ramp may correspond to a user defined speed deceleration time ramp configured by the user of the motor drive, for example at commissioning of the motor drive (and may be referred to in such embodiments as "Ramp_dec_user"). Accordingly, the motor drive may control the deceleration of the speed of the motor according to a speed deceleration time ramp through a speed reference parameter set (according) to the speed deceleration time ramp.

As shown on Fig. 3A, the speed of the motor may (substantially continuously) decrease during the fifth operation phase (④) according to the second speed deceleration time ramp.

In one or more embodiments, the slope of the first speed deceleration time ramp may be chosen (configured) steeper than the slope of the second speed deceleration time ramp, so that the motor drive may force the motor to operate in the generator mode promptly upon detecting that an undersupply fault has occurred. This advantageously ensures that the motor is controlled to first switch to the generator mode in which the motor drive, now lacking sufficient supply, can use the energy fed back by the motor to control the operations of the motor, in particular according to the second speed deceleration time ramp, upon detection of an undersupply fault. As the second speed deceleration time ramp may be user defined, configuration errors during configuration of the second speed deceleration time ramp may be mitigated by controlling the operations of the motor while operating according to the second (user-defined) speed deceleration time ramp so as to manage the deceleration pattern with which the speed of the motor decreases further to an undersupply fault (for example so as to avoid one or more of an excessive speed deceleration of the motor and an overly slow speed deceleration of the motor).

The proposed scheme therefore provides an improved scheme for controlling deceleration of the speed of the motor upon occurrence of an undersupply fault (e.g. a mains loss).

As shown on Fig. 3A, in embodiments in which an internal bus electrical (voltage, current) signal (sometimes referred to in the present application as a "DC Bus voltage value") can be monitored, upon controlling the deceleration of the motor speed according to the second speed deceleration time ramp, the level of the internal bus electrical signal may evolve (in a substantially continuous manner) as the energy available upon deceleration of the motor may be supplied to the internal bus electrical signal level. In such embodiments (in which an internal bus electrical (voltage, current) signal can be monitored), the level of the internal bus electrical (voltage, current) signal may be monitored (in any suitable manner, such as for example, depending on the embodiment, substantially continuously, or substantially periodically) while the speed of the motor is controlled to ensure deceleration of the motor speed according to the second speed deceleration time ramp.

(⑤a) *Monitor the speed of the motor (through a signal)* : In a sixth operating phase (⑤a), the motor drive may monitor the speed of the motor (that decreases according to the second speed deceleration time ramp), for example through a (motor) signal corresponding to an electrical signal received from the motor such as for example, in some embodiments, a (voltage, current) signal flowing on an internal bus of the motor drive.

As discussed above, in embodiments in which an internal bus electrical (voltage, current) signal (sometimes referred to in the present application as a "DC Bus voltage value") can be monitored, upon controlling the deceleration of the motor speed according to the second speed deceleration time ramp, the level of the internal bus electrical (voltage, current) signal may be monitored (in any suitable manner, such as for example, depending on the embodiment, substantially continuously, or substantially periodically) while the speed of the motor is controlled to ensure deceleration of the motor speed according to the second speed deceleration time ramp.

In one or more embodiments, monitoring the speed of the motor through the motor signal corresponding to the electrical signal received from the motor may comprise the motor drive determining whether the signal value stays between the low signal level threshold and the high signal level threshold. In some embodiments, the decrease of the speed of the motor according to the second speed deceleration time ramp may be sustained as long as one or more of the signal corresponding to the electrical signal received from the motor is not determined to be above the high signal level threshold and the signal corresponding to the electrical signal received from the motor is not determined to be below the low signal level threshold.

For example, in embodiments in which an internal bus electrical (voltage, current) signal can be monitored, the internal bus electrical signal may be monitored to determine whether one or more of the internal bus electrical signal becomes higher than the high signal level threshold and the internal bus electrical signal becomes lower than the low signal level threshold.

In one or more embodiments, in a case where the signal corresponding to the electrical signal received from the motor is determined to be in the range between the low signal level threshold and the high signal level threshold, the motor drive may remain in an operating mode in which the motor speed is controlled to decrease according to the second speed deceleration time ramp.

In embodiments in which an internal bus electrical (voltage, current) signal can be monitored, in a case where the internal bus electrical signal is determined to be in the range between the low signal level threshold and the high signal level threshold, the motor drive may remain in an operating mode in which the motor speed is controlled to decrease according to the second speed deceleration time ramp through a reference speed parameter being set according to the second speed deceleration time ramp.

As shown on Fig. 3A, during the sixth operating phase (⑤a), the actual motor speed follows the reference speed (that would correspond to the as motor speed as controlled to follow the (e.g. user defined) second speed deceleration time ramp) until the motor speed reaches the wMinSpeed value. As such is also the case during the phases ⓪ to ④, the two curves (motor speed and reference speed) are substantially identical (and therefore superimposed) in the example shown on Fig. 3A.

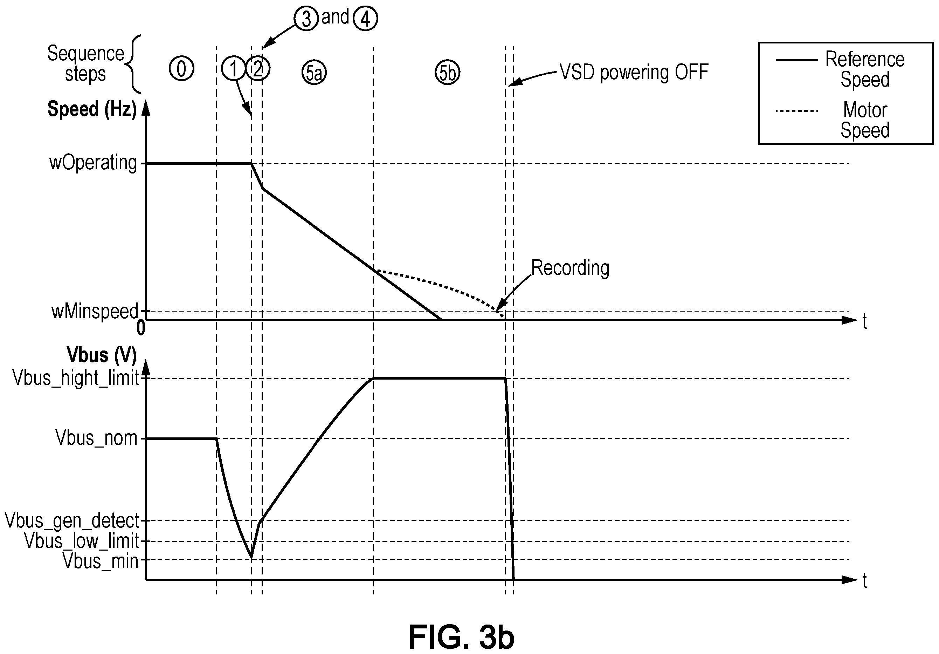

Figure 3B illustrates an exemplary sequence of operations of a motor drive according to one or more embodiments of the present subject disclosure.

As the operating phases ⓪, ①, ②, ③, and ④ shown on Fig. 3B are similar to that shown on Fig. 3A and described above, reference is made to the above description thereof which will not be repeated here for the sake of concision.

In some embodiments, the motor drive may monitor the speed of the motor (that decreases according to the second speed deceleration time ramp), for example through a signal corresponding to an electrical signal received from the motor (such as for example, in some embodiments, a (voltage, current) signal flowing on an internal bus of the motor drive).

In embodiments in which an internal bus electrical (voltage, current) signal (sometimes referred to in the present application as a "DC Bus voltage value") can be monitored, upon controlling the deceleration of the motor speed according to the second speed deceleration time ramp, the level of the internal bus electrical (voltage, current) signal may be monitored (in any suitable manner, such as for example, depending on the embodiment, substantially continuously, or substantially periodically) while the speed of the motor is controlled to ensure deceleration of the motor speed according to the second speed deceleration time ramp.

Fig. 3B shows an exemplary sequence of operations in which the slope of the second speed deceleration time ramp is overly steep in that it leads to an increase of the voltage signal of the internal bus of the motor drive (consequent to the decrease of the speed of the motor) beyond a predefined high signal level threshold. In this regard it may be noted that the slope of the exemplary second speed deceleration time ramp shown on Fig. 3B is steeper than that of the exemplary second speed deceleration time ramp shown on Fig. 3A.

In one or more embodiments in which an internal bus electrical (voltage, current) signal can be monitored, upon detecting that the internal bus electrical signal has reached the predefined high signal level threshold (for example as a result of a steeper sloped second speed deceleration time ramp), the motor drive may switch, in some embodiments further to the fifth operating phase (④) as described herein and in some embodiments further to the sixth operating phase (⑤a) as described herein, to an operating mode during a seventh operating phase (⑤b) in which it controls the internal bus electrical signal instead of controlling the speed of the motor so as to protect the motor drive by avoiding that the internal bus electrical signal exceeds a maximum level acceptable for the internal bus.

As shown on Fig. 3B, during the seventh operating phase (⑤b), the actual motor speed no longer follows the reference speed (that would correspond to the as motor speed as controlled to follow the (e.g. user defined) second speed deceleration time ramp). In contrast, the actual motor speed follows the reference speed during the phases ⓪ to ⑤a, and the two curves (motor speed and reference speed) are substantially identical (and therefore superimposed) in the example shown on Fig. 3B.

In one or more embodiments, monitoring the speed of the motor through the signal corresponding to the electrical signal received from the motor may comprise the motor drive determining whether the signal value reaches a high signal level threshold.

In one or more embodiments, in a case where the signal corresponding to the electrical signal received from the motor is determined to be above the high signal level threshold, the motor drive may switch to an operating mode in which the motor speed is not controlled and the signal is set to a predefined high limit signal value.

For example, in embodiments in which an internal bus electrical (voltage, current) signal can be monitored, in a case where the internal bus electrical signal is determined to be above the high signal level threshold, the motor drive may switch (from an operating mode in which the motor drive controls the speed of the motor) to an operating mode (the "DC Bus control mode") in which the internal bus electrical signal is controlled, for example in some embodiments through the internal bus electrical signal being set to a predefined high limit signal value (which may be referred to as "Vbus_high_limit"). In this operating mode, the speed of the motor may not be controlled, and may instead become a consequence of the regulation of the internal bus electrical signal.

For example, in some embodiments, the motor drive may be configured to set the level of the internal bus electrical signal to a predefined "Vbus_high_limit." As a consequence, the controlling the speed of the motor operating in generating mode does not lead to a fault in the motor drive due to an overly high electrical signal on the internal bus of the motor.

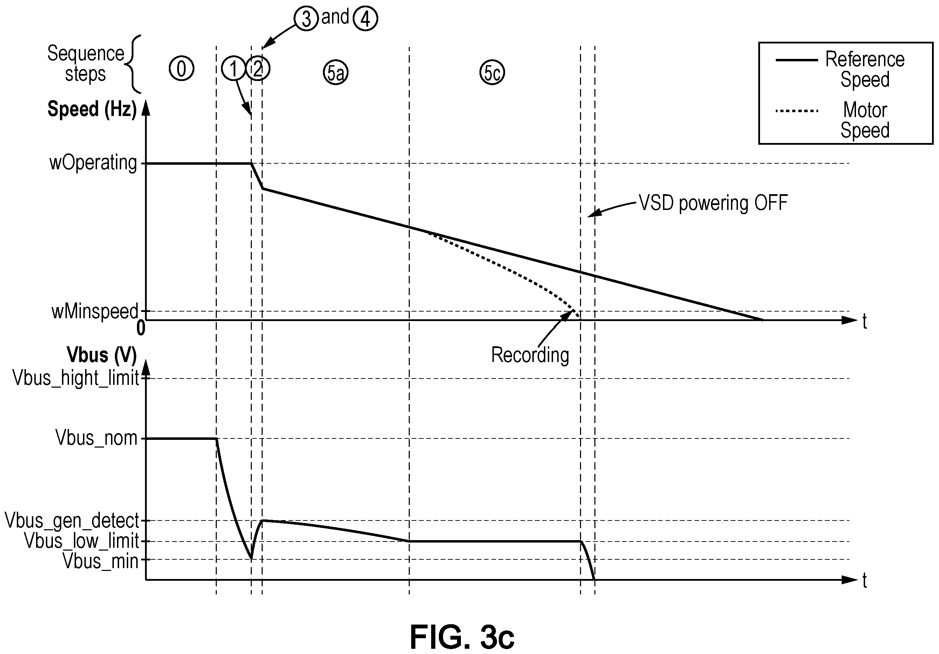

Figure 3C illustrates an exemplary sequence of operations of a motor drive according to one or more embodiments of the present subject disclosure.

As the operating phases ⓪, ①, ②, ③, and ④ shown on Fig. 3C are similar to that shown on Fig. 3A and described above, reference is made to the above description thereof which will not be repeated here for the sake of concision.

In some embodiments, the motor drive may monitor the speed of the motor (that decreases according to the second speed deceleration time ramp), for example through a signal corresponding to an electrical signal received from the motor (such as for example, in some embodiments, a (voltage, current) signal flowing on an internal bus of the motor drive).

As discussed above, in embodiments in which an internal bus electrical (voltage, current) signal can be monitored, upon controlling the deceleration of the motor speed according to the second speed deceleration time ramp, the level of the internal bus electrical (voltage, current) signal may be monitored (in any suitable manner, such as for example, depending on the embodiment, substantially continuously, or substantially periodically) while the speed of the motor is controlled to ensure deceleration of the motor speed according to the second speed deceleration time ramp.

Fig. 3C shows an exemplary sequence of operations in which the slope of the second speed deceleration time ramp is such that it leads to a decrease of the voltage signal of the internal bus of the motor drive (consequent to the decrease of the speed of the motor), until the voltage signal of the internal bus of the motor drive reaches a low signal level threshold. In this regard it may be noted that the slope of the exemplary second speed deceleration time ramp shown on Fig. 3C is less steep than that of the exemplary second speed deceleration time ramp shown on Fig. 3A.

In one or more embodiments in which an internal bus electrical (voltage, current) signal can be monitored, upon detecting that the internal bus electrical signal has reached the predefined high signal level threshold (for example as a result of a steeper sloped second speed deceleration time ramp), the motor drive may switch, in some embodiments further to the fifth operating phase (④) as described herein and in some embodiments further to the sixth operating phase (⑤a) as described herein, to an operating mode during an eight operating phase (⑤c) in which it controls the internal bus electrical signal instead of controlling the speed of the motor so as to protect the motor drive by avoiding that the internal bus electrical signal exceeds a maximum level acceptable for the internal bus.

As shown on Fig. 3C, during the eight operating phase (⑤c), the actual motor speed no longer follows the reference speed (that would correspond to the as motor speed as controlled to follow the (e.g. user defined) second speed deceleration time ramp). In contrast, the actual motor speed follows the reference speed during the phases ⓪ to ⑤a, and the two curves (motor speed and reference speed) are substantially identical (and therefore superimposed) in the example shown on Fig. 3C.

In one or more embodiments, monitoring the speed of the motor through the signal corresponding to the electrical signal received from the motor may comprise the motor drive determining whether the signal value reaches a low signal level threshold.

In one or more embodiments, in a case where the signal corresponding to the electrical signal received from the motor is determined to be below the low signal level threshold, the motor drive may switch to an operating mode in which the motor speed is not controlled and the signal is set to a predefined low limit signal value.

In embodiments in which an internal bus electrical (voltage, current) signal can be monitored, in a case where the internal bus electrical signal is determined to be below the low signal level threshold, the motor drive may switch (from an operating mode in which the motor drive controls the speed of the motor) to an operating mode (which may be referred to as "DC Bus control mode") in which the internal bus electrical signal is controlled, for example in some embodiments through the internal bus electrical signal being set to a predefined low limit signal value (which may be referred to as "Vbus_low_limit"). In this operating mode, the speed of the motor may not be controlled, and may instead become a consequence of the regulation of the internal bus electrical signal.

For example, in some embodiments, the motor drive may be configured to set the level of the internal bus electrical signal to a predefined "Vbus_high_limit." As a consequence, controlling the speed of the motor operating in generating mode does not lead to a fault in the motor drive due to an overly low electrical signal on the internal bus of the motor, thereby preventing the motor drive from continuing to control operations of the electrical motor while the electrical motor operates in generator mode.

The skilled person will understand that, while Fig. 3A shows a motor speed curve ("Speed" in Hz) and an internal bus signal curve ("Vbus" in V) in which the motor speed follows the reference speed , Fig. 3A provides a simplified view that represents the motor speed curve and the reference speed curve as coincident (fully aligned), in some embodiments, depending on speed control settings and performance, a static or a tracking error may appear between the motor speed curve and the internal bus signal curve.

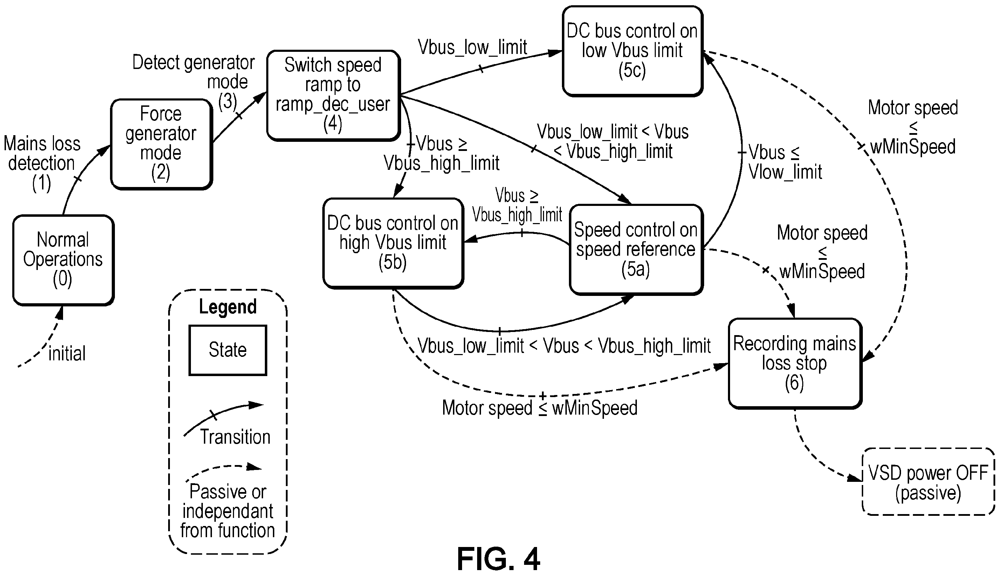

Fig. 4 is a diagram that illustrates an exemplary proposed method as a state machine according to embodiments of the present subject disclosure.

Depending on the embodiment, the proposed method may comprise a sequence of one or more of the following acts:
(0): In some embodiments, the sequence may be initialized by a motor drive operating in a normal mode of operation.
(1): In some embodiments, an undersupply fault (e.g. a mains loss) occurring at the motor drive may be detected.
(2): In some embodiments, the motor drive may be configured for, upon detecting the undersupply fault, forcing the electric motor to operate in a generator mode in which the electric motor supplies power to the motor drive through a motor (e.g. current) signal. In some embodiments, the motor drive may control the motor to operate in the generator mode by controlling the electric motor to operate according to a preconfigured first speed deceleration time ramp of deceleration of a speed of operation of the electric motor.
(3): In some embodiments, the motor drive may be configured for detecting that the electric motor operates in the generator mode.
(4): In some embodiments, once it has been determined that the electric motor operates in the generator mode, the motor drive may be configured for controlling the electric motor to operate in the generator mode according to a preconfigured second speed deceleration time ramp ("Ramp_dec_user") of deceleration of the speed of operation of the electric motor. In some embodiments, the slope of the preconfigured first speed deceleration time ramp may be configured steeper than the slope of the preconfigured second speed deceleration time ramp.

In some embodiments, the motor drive may be configured for, while the electric motor operates in the generator mode according to a preconfigured second speed deceleration time ramp, monitoring an internal bus electrical signal ("Vbus") that corresponds to the supply signal fed back from the electric motor operating in generator mode.
(5a): In some embodiments, the level of the internal bus electrical signal may be monitored to determine whether such level stays in a range between a low limit threshold and a high limit threshold ("*Vbus*_*Low*_*limit* < *Vbus* < *Vbus*_*High*_*limit*")*.* In some embodiments, while the level of the internal bus electrical signal is determined to be in the range between the low limit threshold and the high limit threshold, the motor drive may be configured for controlling the speed of the electric motor based on a speed reference corresponding to the preconfigured second speed deceleration time ramp. For example, in embodiments in which the second speed deceleration time ramp is configured by the user (for example at commissioning of the motor drive), the proposed method may allow following this second speed deceleration time ramp to the extent that the internal bus electrical signal stays within an acceptable range for the motor drive to operate without fault due to an excessive internal bus electrical signal.
(5b): In some embodiments, the motor drive may be configured to, upon determining that the level of the internal bus electrical signal rises above the high limit threshold ("*Vbus* ≥ *Vbus*_*High*_*limit*") during the phase where the electric motor operates in the generator mode according to the preconfigured second speed deceleration time ramp, control the level of the internal bus electrical signal below or equal to the high limit threshold, for example by maintaining the level of the internal bus electrical signal at a (e.g. substantially constant) level below or equal to the high limit threshold. In this operating mode, the speed of the motor may not be controlled, and may instead become a consequence of the regulation of the internal bus electrical signal.
(5c): In some embodiments, the motor drive may be configured to, upon determining that the level of the internal bus electrical signal falls below the low limit threshold (" *Vbus* ≤ *Vbus*_*Low*_*limit* ") during the phase where the electric motor operates in the generator mode according to the preconfigured second speed deceleration time ramp, control the level of the internal bus electrical signal above or equal to the low limit threshold, for example by maintaining the level of the internal bus electrical signal at a (e.g. substantially constant) level above or equal to the low limit threshold. In this operating mode, the speed of the motor may not be controlled, and may instead become a consequence of the regulation of the internal bus electrical signal.
(6): In some embodiments, upon determining that the speed of the motor falls under a predetermined low speed limit ("*Motor speed* ≤ *wMinSpeed*"), a recording of the speed decrease pattern until the motor stops may be performed, and a corresponding data log may be stored in a memory. In some embodiments, the motor drive may be configured with a minimum speed parameter (« wMinSpeed ») which may be used as a threshold under which it may be considered that the motor drive will shut off.

Once the motor speed is low (e.g. below a minimum speed threshold (« wMinSpeed »)) or substantially null, the motor drive may not have any supply power and may power off.

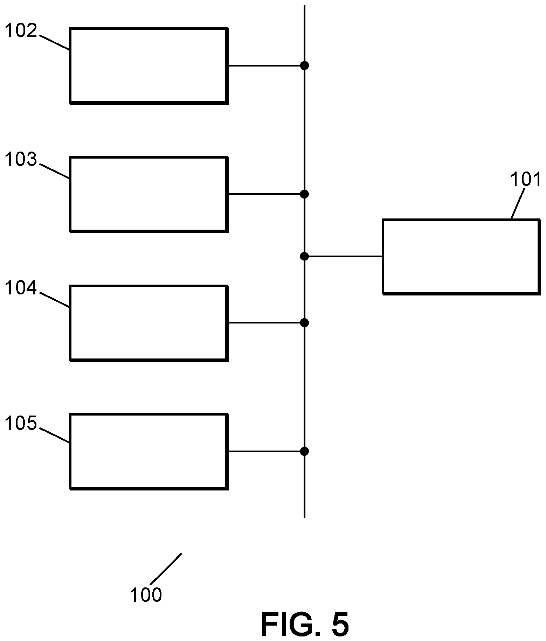

Fig. 5 is a diagram illustrating parameters that may be used for implementation of a proposed method according to one or more embodiments.

In one or more embodiments, the speed-controlled deceleration sequence in case of an undersupply fault function according to embodiments of the present subject disclosure may use different types of parameters: (1) so-called "pre-configuration" parameters that are not available to the user for a user configuration and that may in some embodiments be configured at factory settings, (2) so-called "live inputs" parameters that correspond to input signals to the speed-controlled deceleration sequence in case of an undersupply fault function that change during operation of the motor drive implementing the function, (3) so-called "user configuration" parameters that are available to the user for configuration by the user (and in some embodiments may be pre-configured to a default value), and (4) so-called "advanced configuration" parameters that may be preconfigured (e.g. by factory setting) and also available to the user for configuration (e.g. customization) by the user.

Depending on the embodiment, the pre-configuration parameters may include one or more of the following parameters:
Internal bus signal high limit threshold ("*Vbus*_*high*_*limit*"): High limit threshold used to compare against the level of the internal bus signal in embodiments in which an internal bus signal is used. In some embodiments, the internal bus signal high limit threshold may advantageously be used as a maximum permitted level of the signal on the internal bus in order to protect the motor drive;
Internal bus signal nominal level ("*Vbus*_*nom*"): Expected level of the internal bus signal during normal operation of the motor drive in embodiments in which an internal bus signal is used;
Internal bus signal generator detection threshold (" *Vbus*_*gen*_*detect* "): Threshold used to compare against the level of the internal bus signal in embodiments in which an internal bus signal is used to detect that the electric motor is operating in the generator mode; In some embodiments, the motor drive may be configured to detect that the internal bus signal generator detection threshold is reached, in some embodiments further to having detected that a minimum internal bus signal threshold (which may be configured at a level below that configured for the internal bus signal generator detection threshold) has been reached.

Internal bus signal low limit threshold ("*Vbus*_*low*_*limit*"): Low limit threshold used to compare against the level of the internal bus signal in embodiments in which an internal bus signal is used. In some embodiments, the internal bus signal low limit threshold may advantageously be used as a minimum threshold for the signal on the internal bus under which the level of the internal bus signal is to be controlled by the motor drive;
Minimum internal bus signal threshold (" *Vbus*_*min* "): Undersupply fault detection threshold used to compare against the level of the internal bus signal in embodiments in which an internal bus signal is used, to detect occurrence of an undersupply fault at the motor drive.

Depending on the embodiment, the live inputs parameters may include one or more of the following parameters:
Internal bus signal measurement (" *Vbus measurement* "): In some embodiments in which an internal bus signal is used, the (changing) level of the internal bus signal may be used to manage operation of the motor drive, for example for comparison with a pre-configuration parameter as described above.

Speed reference: In some embodiments, the speed reference parameter may include one or more parameters defining one or more of a target motor speed value and speed change time trajectory (e.g. a linear trajectory such as a speed change time ramp). In some embodiments, a speed reference value may correspond to one or more of a speed change time trajectory and a target motor speed value. In some embodiments, a speed reference value may correspond to a target motor speed value which may be used to calculate a speed change time trajectory. In the present subject disclosure, the terms « time trajectory" may be used to refer to a path parameterized in time between two values, and the « speed change time trajectory" may be used to refer to a path parameterized in time between two motor speed values. In some embodiments, a speed reference may correspond to a speed change time trajectory that may be used to reach a target motor speed value and to control the speed of the motor accordingly. For example, in some embodiments, a speed trajectory may be computed by the motor drive based on a speed set point and (e.g. user-configured) time ramp(s), and such speed trajectory may define the target motor speed value at any time.

In one or more embodiments, the user configuration parameters may include the following parameter:
User configured speed deceleration time ramp of deceleration of a speed of operation of the motor (" *Ramp*_*Dec*_*user* "): In some embodiments, the user may configure one or more parameters of speed deceleration time ramp of deceleration of a speed of operation of the motor to be used in case of occurrence of an undersupply fault at the motor drive. For example, the slope of speed deceleration time ramp of deceleration of a speed of operation of the motor to be used in case of occurrence of an undersupply fault at the motor drive may be available for configuration by the user, possibly with one or more of a recommended maximum value, a recommended minimum value, and a recommended range of values.

Depending on the embodiment, the advanced configuration parameters may include one or more of the following parameters:
Force generator mode speed deceleration time ramp ("*Ramp*_*force*_*gen*"): In some embodiments, one or more parameters (e.g. a slope) of a speed deceleration time ramp of deceleration of a speed of operation of the motor that is used according to embodiments upon detecting the occurrence of an undersupply fault at the motor drive for forcing the electric motor to operate in the generator mode may be pre-configured, and may also be available for user customization. For example, the slope of the speed deceleration time ramp that is used according to embodiments for forcing the electric motor to operate in the generator mode may be available for configuration by the user, possibly with one or more of a recommended maximum value, a recommended minimum value, and a recommended range of values;
Minimum Motor Speed Threshold ("*wMinSpeed*"): Low limit motor speed threshold used to compare against the measured motor speed.

In one or more embodiments the following commissioning approach may be followed for commissioning of an improved motor drive according to embodiments of the present subject disclosure:
The proposed speed-controlled deceleration sequence in case of an undersupply fault function can advantageously have a completely autonomous behavior once it is configured, and in some embodiments the only required user configuration may be the configuration of the speed deceleration time ramp of deceleration of a speed of operation of the motor as the deceleration time to decelerate from motor nominal speed to zero (for example by defining the ramp slope in Hz/s) (e.g. through the "*Ramp*_*Dec*_*user*" parameter described above).

When using embodiments of the proposed function, the user may generally have a deceleration ramp target, that may correspond to a typical use case being the coordinated shut down of multiple interconnected conveyors, in order for all of them to stop in a coordinated way despite the absence of mains on one of them.

The only parameter and robustness brought by the function in some embodiments allows defining a simple incremental commissioning sequence, as follows:
(1) set "Ramp_Dec_user" with the targeted value;
(2) go into operation ;
(3) Once in steady operation, shut down the upstream supply of the VSD (mains shut down, by example by turning off VSD circuit braker to emulate a mains loss);
(4) Observe the deceleration speed of the motor and act accordingly: Deceleration is satisfying **→** Stop, in which case the configuration can be declared satisfactory;
(4a) In cases where the ramp is too steep, bring the VSD to high level DC Bus control (the speed stop following the "Ramp_Dec_user" to be slower). This behavior can be satisfying, in which case the configuration can be declared satisfactory, otherwise **→** Increase "Ramp_Dec_user" slightly and come back to (2).
(4b) In cases where the ramp is too slow, bring the VSD to low level DC Bus control (the speed stop following the "Ramp_Dec_user" to be faster). This behavior can be satisfying, in which case the configuration can be declared satisfactory, otherwise **→** decrease "Ramp_Dec_user" slightly and come back to (2).

Fig. 5 illustrates an exemplary architecture of an apparatus 100 configured to implement methods in accordance with embodiments of the present subject disclosure. The apparatus 100 may, depending on the embodiment, be comprised in a motor drive or in a motor system management server.

As shown in Fig. 5, the apparatus 100 may comprise engines or functions that are similar to those comprised in the motor drive 2 illustrated on Figs. 1A and 1B, and may be configured to perform a method for managing a motor drive in accordance with embodiments of the present subject disclosure.

The apparatus 100, which may comprise one or more computers, includes a control engine 101, a speed-controlled deceleration engine 102, a undersupply fault detection (reduction of power supplied detection ) engine 103, a data interface engine 104, and a memory 105.

In the architecture illustrated on Fig. 4, all of the speed-controlled deceleration engine 102, undersupply fault detection engine 103, data interface engine 104, and memory 105 are operatively coupled with one another through the control engine 101.

In some embodiments, the speed-controlled deceleration engine 102 is configured to perform various aspects of embodiments of one or more of the proposed methods for managing a motor drive configured for driving an electric motor in case of occurrence of an undersupply fault at the motor drive as described herein, such as upon detecting a reduction of power supplied to the motor drive by the supply network, controlling the electric motor to operate in a generator mode in which the electric motor supplies power to the motor drive through a motor (current) signal by controlling the electric motor to operate according to a preconfigured first speed deceleration time ramp of deceleration of a speed of operation of the motor, and upon determining that the electric motor operates in the generator mode, controlling the electric motor to operate in the generator mode according to a preconfigured second speed deceleration time ramp of deceleration of the speed of operation of the electric motor. In some embodiments, a slope of the preconfigured first speed deceleration time ramp may be steeper than a slope of the preconfigured second speed deceleration time ramp.

In some embodiments, the undersupply fault detection engine 103 is configured to perform various aspects of embodiments of one or more of the proposed methods as described herein, such as detecting a reduction of power supplied to the motor drive by a supply network. In some embodiments, the undersupply fault detection engine 103 is configured to detect a loss of mains supplied by the supply network.

In some embodiments, the data interface engine 104 is configured to receive as input power supply network signals and electrical signals output by the electrical motor, under the control of the control engine 101.

The control engine 101 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 101 may also comprise, or may be in communication with, computer storage media, such as, without limitation, the memory 105, capable of storing computer program instructions or software code that, when executed by the processor, causes the processor to perform the elements described herein. In addition, the memory 105 may be any type of data storage or computer storage medium, coupled to the control engine 101 and operable with the speed-controlled deceleration engine 102, the undersupply fault detection engine 103, and the data interface engine 104 to facilitate management of data stored in association therewith, such as, for example, a cache memory, a data farm, a data warehouse, a data mart, a datacenter, a data cloud, or a combination thereof.

In embodiments of the present subject disclosure, the apparatus 100 is configured for performing one or more of the methods described herein. The apparatus 100 may in some embodiments be included in a motor drive configured for driving an electric motor.

It will be appreciated that the apparatus 100 shown and described with reference to Fig. 5 is provided by way of example only. Numerous other architectures, operating environments, and configurations are possible. Other embodiments of the node may include fewer or greater number of components and may incorporate some or all of the functionality described with respect to the apparatus components shown in Fig. 5. Accordingly, although the control engine 101, speed-controlled deceleration engine 102, undersupply fault detection engine 103, data interface engine 104, and memory 105 are illustrated as part of the apparatus 100, no restrictions are placed on the location and control of components 101 - 105. In particular, in other embodiments, any of components 101 - 105 may be part of different entities or computing systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for managing a motor drive configured for driving an electric motor, the method comprising, the motor drive being electrically coupled to a supply network for power supply of the motor drive, and being electrically coupled to the electric motor through terminals for driving the electric motor:
Upon detecting a reduction of power supplied to the motor drive by the supply network, controlling the electric motor to operate in a generator mode in which the electric motor supplies power to the motor drive through a motor signal by controlling the electric motor to operate according to a preconfigured first speed deceleration time ramp of deceleration of a speed of operation of the motor;
Upon determining that the electric motor operates in the generator mode, controlling the electric motor to operate in the generator mode according to a preconfigured second speed deceleration time ramp of deceleration of the speed of operation of the electric motor;
Wherein a slope of the preconfigured first speed deceleration time ramp is steeper than a slope of the preconfigured second speed deceleration time ramp.

2. The method according to claim 1, wherein determining that the electric motor operates in the generator mode comprises detecting that a signal corresponding to the motor signal has reached a generator mode detection voltage threshold.

3. The method according to any of the preceding claims, wherein the preconfigured first speed deceleration time ramp corresponds to a first time duration for a speed of the electric motor to decelerate from a predefined first speed value to a predefined second speed value, and the preconfigured second speed deceleration time ramp corresponds to a second time duration for a speed of the electric motor to decelerate from the predefined first speed value to the predefined second speed value, wherein the first time duration is shorter than the second time duration.

4. The method according to any of the preceding claims, further comprising: performing one or more monitoring of a value of an internal bus signal on an internal bus of the motor drive during the controlling of the electric motor to operate in the generator mode according to the preconfigured second speed deceleration time ramp of deceleration of the speed of operation of the electric motor.

5. The method according to any of the preceding claims, further comprising: monitoring a signal corresponding to the motor signal during operation of the electric motor in generator mode according to the preconfigured second speed deceleration time ramp.

6. The method according to any of the preceding claims, wherein upon detecting that a signal corresponding to the motor signal reaches a predefined high limit threshold during operation of the electric motor in generator mode according to the preconfigured second speed deceleration time ramp, controlling the value of the signal corresponding to the motor signal to substantially correspond to a predefined high limit threshold.

7. The method according to any of the preceding claims, wherein upon detecting that a signal corresponding to the motor signal reaches a predefined low limit threshold during operation of the electric motor in generator mode according to the preconfigured second speed deceleration time ramp, controlling the value of the signal corresponding to the motor signal to substantially correspond to a predefined low limit threshold.

8. The method according to claims 5 - 7, wherein the signal corresponding to the motor signal comprises an internal bus signal on an internal bus of the motor drive.

9. The method according to claim 8, wherein the controlling the value of the signal comprises controlling a value of the internal bus signal to remain in one or more of below the predefined low limit threshold and above the predefined high limit threshold.

10. The method according to any of the preceding claims, further comprising: upon determining that the speed of operation of the motor has reached a predefined minimum speed threshold, recording the stop of the motor operating in the generator mode.

11. The method according to any of the preceding claims, wherein detecting the reduction of power supplied by the supply network comprises detecting a loss of power supplied by the supply network.

12. The method according to any of the preceding claims, wherein the motor drive comprises a variable speed drive, VSD.

13. An apparatus, the apparatus comprising a processor, a memory operatively coupled to the processor, and an interface for coupling to an induction motor to be driven by the apparatus, wherein the apparatus is configured to perform a method according to any of claims 1 to 12.

14. A computer program product comprising computer program code tangibly embodied in a computer readable medium, said computer program code comprising instructions to, when provided to a computer system and executed, cause said computer to perform a method according to any of claims 1 to 12.

15. A data set representing, for example through compression or encoding, a computer program product according to claim 14.
